# EUROPEAN PATENT APPLICATION

(11) **EP 2 907 938 A1**
(43) Date of publication of application: **19.08.2015**
(21) Application number: 14155559.9
(22) Date of filing: 18.02.2014
(51) Int. Cl.: E04F 21/18, E04F 21/22, B25J 9/16, B65G 47/91

(54) **Apparatus and method for placing a tile on a floor**

(71) Applicant: IR-Eng.Limited, Tsimshatsui, Kowloon (CN)
(72) Inventor: Trobec, Etienne, 1820 Montreux (CH)
(74) Representative: Bittner, Thomas L.

(57) **Abstract**

The present disclosure relates to an apparatus for placing a tile (7, 25) on a floor, comprising a holding device (2) configured to hold a stack of tiles (3), a positioning device (5) configured to hold a tile (7, 25) of the stack of tiles (3), a measuring device (18) configured to determine a coordination of the tile (7, 25), and a control device configured to receive measurement signals from the measuring device (18) and further configured to provide control signals to the positioning device (5), wherein the positioning device (5) is further configured to place the tile (7, 25) on the floor according to the control signals provided by the control device. Furthermore, a method for placing a tile on a floor is provided (Fig. 1)

## Description

The invention relates to an apparatus and a method for placing a tile on a floor.

### Background

Placing tiles on a floor is labor intensive work. Usually, the worker is in an uncomfortable position sitting on his knees to put the tiles to the floor.

There exist some academic conceptual studies for providing an automated robot for tiling a floor. In D. Apostolopoulos et al, "Mobile Robot for Automatic Installation of Floor Tiles" a configuration of a robot is described. In particular, detection and classification of errors is disclosed. In the Master thesis of J.P.R. Jongeneel, "Robotic tiling of rough floors: A design study" another robot concept is disclosed.

### Summary

It is an object to provide improved technologies for placing tiles on a floor.

The object is solved by the apparatus according to independent claim 1 and the method according to the independent claim 15. Further embodiments are subject matter of dependent claims.

In one aspect, an apparatus for placing a tile on a floor is disclosed. The apparatus comprises a holding device which is configured to hold a stack of tiles, a positioning device which is configured to hold a tile of the stack of tiles, a measuring device which is configured to determine a position and / or an orientation of the tile held by the positioning device, and a control device which is configured to receive measurement signals from the measuring device and which is further configured to provide control signals to the positioning device. The positioning device is further configured to place the tile on the floor according to the control signals provided by the control device. The coordination of the tile held by the positioning device may comprise a position and / or an orientation of the tile. The coordination may be determined with respect to a coordination of tiles already placed on the floor.

In another aspect, a method for placing a tile on a floor is disclosed. After loading the holding device of the apparatus with a stack of tiles, the tiles are placed on the floor using the apparatus.

With the apparatus a robot is provided for an automated placing of the tiles. The apparatus may comprise a frame to which some or all components of the apparatus are connected. The apparatus may further comprise a power source, in particular for electrical energy. The power source can be provided in form of a battery, which may be rechargeable, and / or by a cable connection to a local plug socket.

The apparatus may have reduced dimensions compared to the robots known from the prior art. The apparatus comprises a stack of tiles. The stack of tiles may be arranged in a vertical orientation. Alternatively, the stack may be arranged with an inclination. The inclination may have an angle between 0° and 89°, preferably between 0° and 60°, more preferably between 0° and 45°, with respect to a vertical axis. Due to the stacked arrangement the tiles take less place than a horizontal stack as proposed in the prior art. The apparatus may have a total width of 70 cm or less, a total depth of 70 cm or less, and / or a total height of 150 cm or less, preferably 130 cm. Such dimensions enable the apparatus to pass through any door. It may be possible to tile any small room, for example a toilet room with dimensions of 0.9 m x 0.9 m. A solution is provided to tile everywhere in a private (small) house. For example, the apparatus can enter a lift or it can be put in the coffer of a car.

The measuring device may be a video camera or a digital camera, e.g. a CCD camera (CCD-charge coupled device) for gathering an image of the tile held by the positioning device and the floor on which the tile shall be placed. In particular, a distance and / or an orientation of the tile held by the positioning device with respect to tiles already placed on the floor can be determined. The measuring device can be configured to measure the position (the x coordinate, the y coordinate and / or the angle around the z axis) of the tile relative to the ones which are already put in place. The measuring device, e.g. camera, may have a resolution of 640 x 480 pixels. The measuring device may be arranged on the positioning device, for example the measuring device may be oriented parallel to the positioning device. The measuring device may be arranged in a fixed position on the positioning device giving the advantage to have always the proper position to watch the tile.

In addition, a second measuring device may be provided, for example a laser sensor. The second measuring device may be configured to determine the height of the tile held by the positioning device with respect to the floor. The second measuring device may be arranged on top of the positioning device. In this case, the z-position (absolute height) of the tile may be computed by taking into account the angle of the positioning device using the Pythagorean Theorem. In an alternative embodiment, a third measuring device can provided which, for example, can be arranged at a lower end of the positioning device, for example by a movable arm, to directly determine the (relative) height related to the tile already placed on the floor. The third measuring device can be a laser sensor. The second and/or the third measuring device may have a precision of 0.1 mm.

Further, the apparatus may comprise a position detection device, for example a laser device. The position detection device can also be configured to measure the dimensions of a room in which the apparatus is located. The length of the walls of the room and / or the angles between the walls can be determined. Further, the position of the apparatus in the room can be determined. The position detection device may have a precision of 1 mm.

Signals determined by the second measuring device, the third measuring device and / or the position detection device may also be transmitted to the control device for evaluating them. The control device may comprise a processor and a memory. The memory may be provided as volatile memory (e.g. random access memory) and / or non-volatile memory (e.g. a hard disk or a flash memory). Further, the control device may have communications means, for example a WLAN-interface (WLAN - wireless local area network) and / or a Bluetooth-interface. The control device may be connected to a display device, for example a touch sensitive screen. A user interface may be provided for the control device, for example a keyboard, a mouse and / or a touchpad.

The tile can be made from any material such as vinyl, ceramic, or stone. The tile can have a variety of shape and dimensions. For example, the tile has a dimension selected from the following group: 5 cm x 5 cm, 10 cm x 10 cm, 20 cm x 25 cm, 25 cm x 30 cm, 30 cm x 30 cm, 40 cm x 40 cm, and 50 cm x 50 cm. Other materials and / or shapes of the tile can also be handled by the apparatus.

The holding device may comprise two conveyor belts between which the stack of tiles is retained. The size of the conveyor belts can be adapted to the dimension and weight of the tiles to be hold. The distance between the two conveyor belts may be adjustable in order to adapt to different tile sizes. For example, a firm plate can be arranged on the inner side of the conveyor belts, respectively, which is adjacent to the stack of tiles in order to prevent a bending of the belts. The plate may be made of a metal or a metal alloy, a low friction material such as stainless steel. The stack of tiles is held with the conveyor belts by applying a force from both sides on the stack. Alternatively, the stack of tiles may be held by an air cushion.

Each of the two conveyor belts may be driven by a conveyor motor, for example a step motor. Using the step motor the belts can be moved up and / or down leading to a respective movement of the stack of tiles. The step motors may be configured to move a distance with one step which corresponds to the thickness of the tiles. The stack of tiles can be arranged between the conveyor belts such that the lowest tile terminates with the lower end of the belt. By moving the step motor one step downwards, the last tile of the stack is dropped from the stack by gravity.

The apparatus may further comprise a drawer device which is arranged below the holding device and which is configured to move between a first position and a second position. In the first position, the drawer device can be arranged below the holding device such that a tile dropped from the stack falls on an upper side of the drawer device. The drawer device can be arranged such that the distance between the upper side of the drawer device and the lowest tile of the stack is between 0.5 cm and 10 cm, preferably between 1 cm and 5 cm. The drawer can be moved, for example by a drawer step motor, to the second position in which the upper side of the drawer extends from the holding device. The second position can be reachable by the positioning device to contact the tile lying on the upper side. The drawer device can be adapted to the dimension and weight of the tiles.

In this embodiment, the tile to be placed is taken at the bottom of the stack leading to two advantages: The tile at the bottom of the stack is as near as possible to the place where it shall be placed. Hereby useless movements are avoided in order to reduce the installation time. Secondly, the tile has already the correct orientation (i.e. horizontal), which is not the case with a horizontal stack, where the tiles themselves are vertically oriented. The tile does not need to have long movements and / or rotation in order to be in its final position. Thus, the apparatus may be configured to place one tile per second.

In one embodiment, the positioning device is vertically adjustable, horizontally adjustable (in x and / or y direction) and / or rotatable about an axis (vertical axis z). The positioning device may be formed as a vertical articulated positioning device which allows the tile to reach a wide surface. The positioning device is not cumbersome (because it is vertical). The positioning device may be configured to reach more than 40 cm in front, to the right and / or to the left. It may be further configured to tile all the surfaces which are normally not reachable by the other existing devices (like edges or narrow corners). The apparatus may comprise two side arms which are connected to the positioning device and which are configured to adjust a horizontal position of the positioning device and / or rotate the positioning device. The side arms may be connected to the positioning device on opposite sides of the positioning device. A first section of a first arm of the two arms may be fixed to the apparatus, for example to the frame. The first section may be connected to an arm step motor for moving the first arm. A second section of the first arm may be connected to the positioning device. The first section and the second section of the first arm may be connected by a joint. A second arm may be provided in an analogue manner.

The positioning device can be configured to provide a shock and / or a vibration like a shock hammer in order to put the tile hardly on the floor, for example in the surface of a glue.

The apparatus may further comprise an upper arm which is connected to the positioning device and which is configured to adjust a vertical position of the positioning device. A first end of the upper arm may be connected to the apparatus, for example to the frame. The connection can be provided as a hinge connection, allowing a pivoting of the upper arm. A second end of the upper arm can be connected to an upper end of the positioning device, for example by a cardan joint. An upper step motor may be connected to the upper arm, in particular to the first end of the upper arm. The positioning can be moved vertically to adjust the proper height of the tile with a precision of 0.1 mm. A motor with a rotating arm or a piston which is integrated in one or both of the side arms can be provided.

In one embodiment, a holding head may be arranged on a lower end of the positioning device for holding the tile, wherein the holding head is movable in six degrees of freedom.

The positioning device may be configured to hold the tile by an underpressure. For example, the holding head may comprise a vacuum cup for holding the tile. The holding head may have a flat upper side. A lower side of the vacuum cup may be configured to hold a tile by a vacuum. The holding head may be connected to the positioning device by another cardan joint.

In another embodiment, an inclinometer may be arranged on the upper side of the holding head. The inclinometer is configured to measure the inclination of the tile angles around the x and/or y axis. With the inclinometer an inclination of the holding head can be determined. The inclinometer may have a resolution of 0.3°. Measurement data provided by the inclinometer may be transmitted to the control device. Using information provided by the inclinometer for adjusting the orientation of the vacuum cup, tiles can be placed with a slope. The angles of the tiles (around x and y) hold by the holding head and / or the vacuum cup may be adjusted with two motors. The motors can be a linear motor or a rotation motor, respectively.

The tile can be moved with six degrees of freedom. The components of the apparatus may be adapted to optimize the amplitude of the movements: The movements which must be wide can be wide (e.g. x and y displacements or rotation around z). On the other hand, it is not necessary to allow big rotation angles around x or y direction regarding the inclination of the tile. For example, the tile which is hold with the vacuum cup can rotate +/- 360° around the axis of the positioning device. The tile can rotate +/- 5° around the x or y axis.

In one embodiment, the third measuring device (e.g. a laser sensor) and / or the inclinometer are mounted on the upper side of the vacuum cup (or the holding head) as close as possible to the tile. In this case, the measurement of the tile position (x, y and z) or of a tile angle does not depend on the position and / or the inclination of the apparatus itself. In other words, if the apparatus has an inclination, it will not perturbate the inclination measurement of the tile. The third measuring device (vertical laser sensor) measures directly the vertical position of the tile related to the one which is already put in place. Thus, no specific processing is needed to determine the height. A fourth measuring device, for example a horizontal laser sensor, can be provided, for example on the lower end of the positioning device, e.g. on the upper side of the holding head. It may be configured to measure the absolute tile position (x coordinate and / or y coordinate) relative to an absolute landmark, e.g. a wall. The position of the apparatus has no influence on the measurements.

The control device may receive signals provided by the fourth measuring device. The control device may be configured to detect and calculate the dimension of the room. For example, the fourth measuring device may rotate around the positioning device. Knowing the distance from the walls and the rotational angle of the positioning device, the control device can determine exactly the dimension of the room (including if the room corners are not 90°). The control device of the apparatus can be configured to define the planning, the sequences of work and / or the orientation in the space like a drone. The dimensions of the room can also be inputted manually on a HMI (Human Machine Interface), for example a touch screen.

The apparatus may further comprise a motion device. For example, the apparatus may comprise four wheels, for example omnidirectional wheels. Each wheel may be moved by a first wheel step motor and a second wheel step motor. The first wheel step motor may be configured to rotate the wheel about its central axis for moving the apparatus. The second wheel step motor may be configured to rotate the wheel around a vertical axis for changing the direction of the wheel.

In a further embodiment, the apparatus comprises a force meter configured to measure a force exceeded on the tile when placing the tile on the floor. The force meter may be arranged on the positioning device, for example on the vacuum cup. A signal may be provided in case a large force or a small force is applied to the tile. The signal may be provided also in addition as an optical and / or an acoustical signal.

The apparatus may further comprise a gluing device. With the gluing device, an adhesive, such as glue, cement and / or mortar, can be applied to the floor before placing the tiles. The gluing device may be arranged on the positioning device. The gluing device may be configured to eject a pre-determined amount of glue to the floor.

### Detailed description of exemplary embodiments

Exemplary embodiments are further described with reference to figures of a drawing.
Fig. 1 shows a schematic representation of an apparatus.
Fig. 2 shows the apparatus of Fig. 1 from another perspective.
Fig. 3 shows some components of the apparatus of Fig.1.
Fig. 4 shows a schematic representation of another apparatus.
Fig. 5 shows the apparatus of Fig. 4 from another perspective.
Fig. 6 shows some components of the apparatus of Fig.4.
Fig. 7 shows the apparatus in operation starting in an edge of a room.
Fig. 8 shows the apparatus in further operation.
Fig. 9 shows the positioning arm.
Fig. 10 shows an enlarged section of the positioning arm.
Fig. 11 shows an enlarged section of the positioning arm and the holding head.
Fig. 12 shows the positioning arm in several configurations.
Fig. 13 shows further configurations of the positioning arm.

In the figures, like reference signs are used for like components.

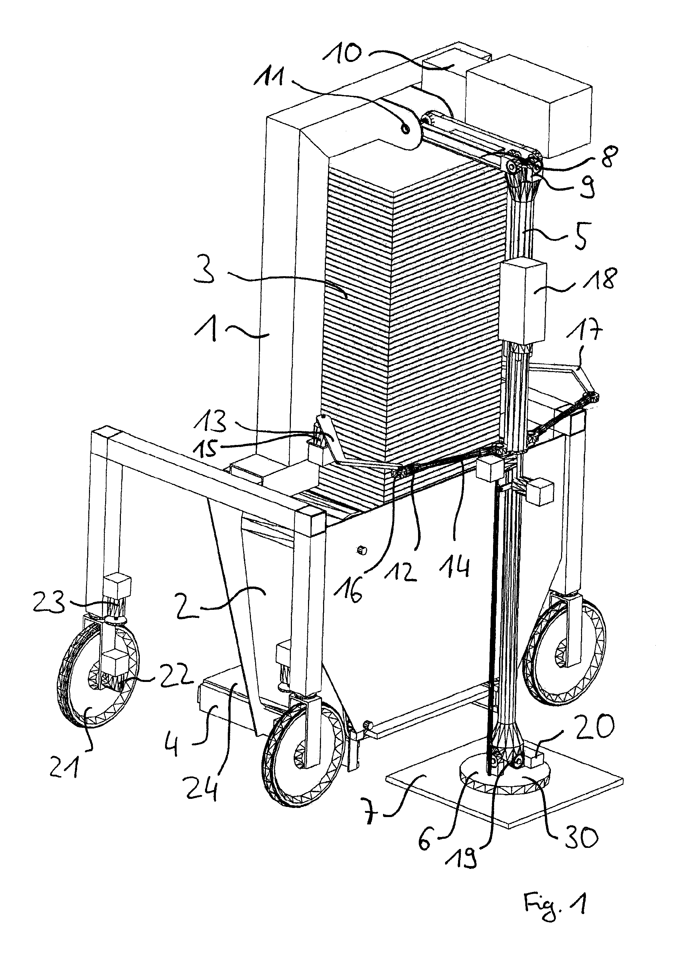

Fig. 1 shows a schematic representation of an apparatus for placing a tile on a floor comprising a frame 1. The components of the apparatus are attached to the frame 1. The apparatus comprises a rechargeable and replaceable battery for electrical power supply (not shown). The apparatus comprises two conveyor belts 2 which are configured to hold a stack of tiles 3. Below the conveyor belts 2 and the stack 3 a drawer device 4 is arranged. The drawer device 4 has an upper side 24 which receives a tile from the stack 3.

The apparatus further comprises a positioning arm 5 with a vacuum cup 6 arranged on a holding head 30. The holding head 30 is connected to a lower end of the positioning arm 5 by a cardan joint 19. The vacuum cup 6 holds a tile 7. An upper arm 8 is connected to an upper end of the positioning arm 5 with another cardan joint 9. An upper step motor 10 is configured to pivot the upper arm 8 around a joint 11. By moving the upper arm 8 the height (z-position) of the positioning arm 5 and herewith of the tile 7 can be adjusted.

A side arm 12 comprising a first section 13 and a second section 14 is connected to the positioning arm 5. The first section 13 and the second section are connected with each other by a joint connection 16. The first section 13 is connected to an arm step motor 15 which is attached to the frame 1. A second side arm 17 (comprising the same components as the side arm 12) is connected to the positioning arm 5 opposite to the side arm 12. By moving the side arm 12 and / or the second side arm 17 the horizontal position (x- and y-position) of the positioning arm 5 can be adjusted.

A camera 18 is arranged on the positioning arm 5. The camera 18 (which can be a digital camera) provides an image of the positioning arm 5 and the tile 7 to a control device (not shown). The camera 18 is fixed on the positioning arm 5; it sees always the same image of the positioning arm 5. The camera 18 is mainly used to watch and position the tile and also the position of the tiles which are already placed. The camera may be an IVC-2Dx model of the company SICK. Using image processing, the coordination (i.e. the position and / or the orientation) of the tile 7 are determined by the control device. Control signals are generated to move the positioning arm 5 to a position suitable for placing the tile 7 on the floor.

An inclinometer 20 is arranged on an upper side of the holding head 30. The inclinometer 20 allows determining an inclination of the holding head 30 (and of the vacuum cup 6) around x axis and / or the y axis. For example, the inclination sensor of the NSx 60 series of the company di-soric may be used.

For moving the apparatus, four wheels 21 are provided. Each wheel is driven by two step motors. A first wheel step motor 22 is configured to rotate the wheel 21 around its central axis. A second wheel step motor 23 is configured to change the direction of the wheel 21.

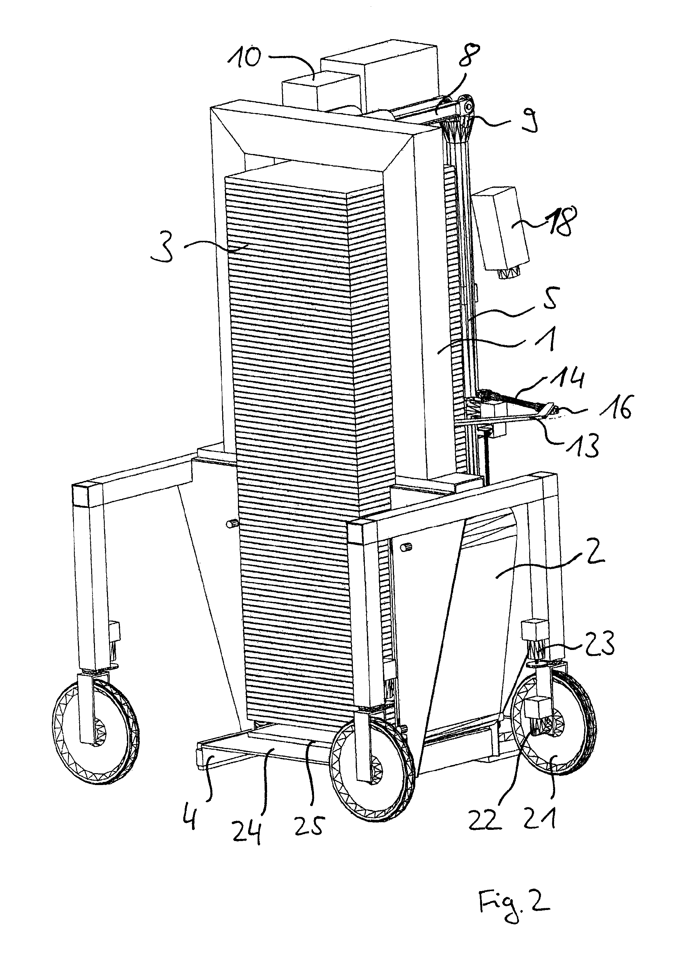

Fig. 2 shows a schematic representation of the apparatus as in Fig. 1 from a different perspective. A tile 25 is arranged on the upper side 24 of the drawer device 4. The drawer device 24 is in a first position below the stack of tiles 3. The tile 25, which was the lowest tile of the stack 3, has fallen from the stack 3 to the upper side 24. By moving the drawer device 4 to a second position extending from the apparatus the tile 25 can be fasted to the vacuum cup 6 of the positioning arm 5 (not shown).

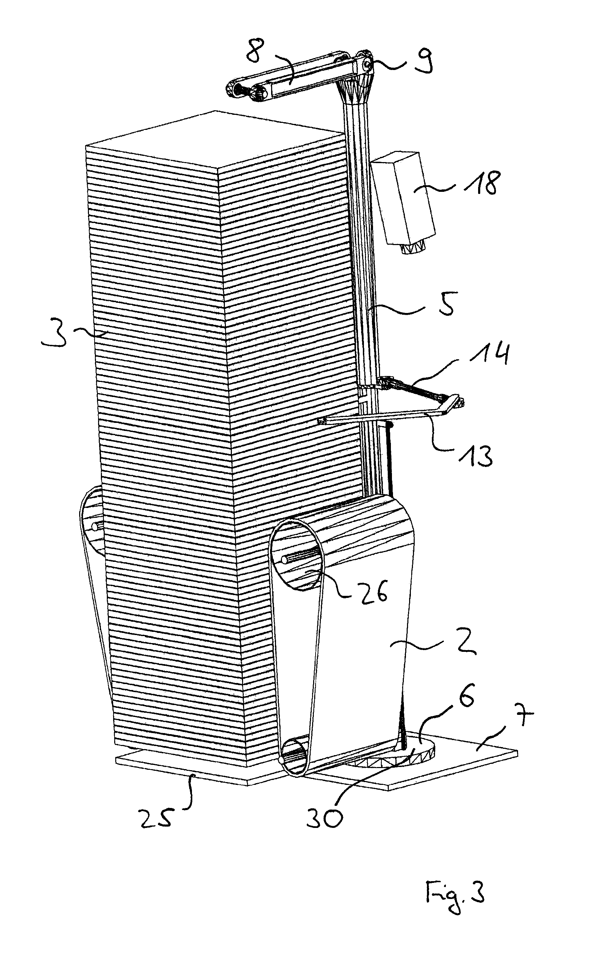

In Fig. 3 an excerpt from the apparatus is shown. The conveyor belt 2 is driven by a conveyor step motor 26 (not shown). By moving the stack 3 downwards to the floor, the last tile 25 is not hold anymore and falls to the drawer device 4 (not shown).

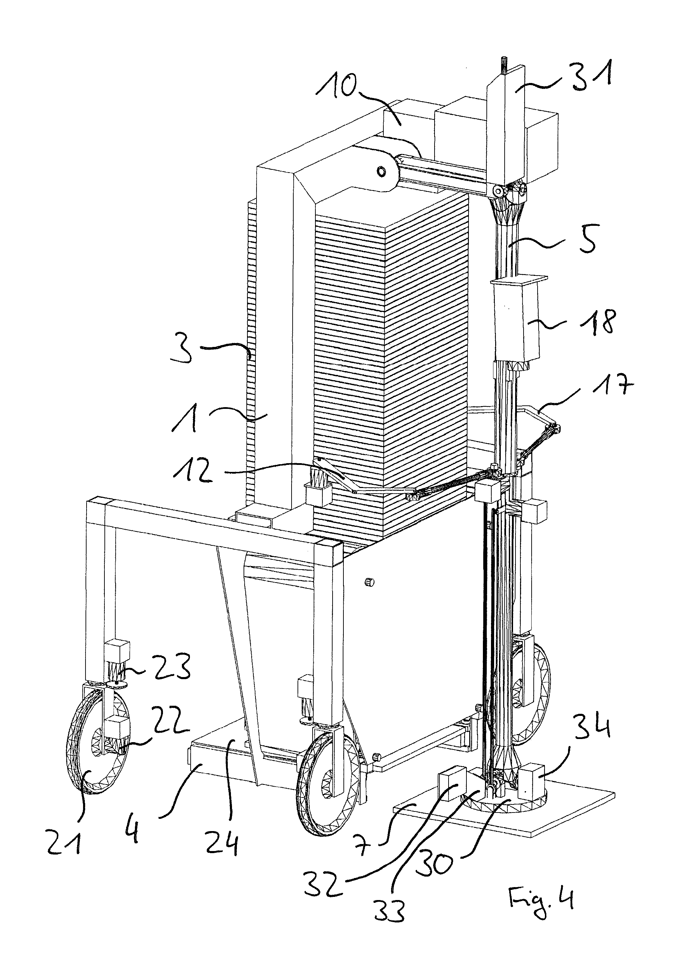

Fig. 4 shows an apparatus similar to the apparatus of Fig. 1. The apparatus of Fig. 4 comprises some additional sensors. For determining the height of the holding head 30 either a first laser sensor 31 (like a GEO LE 71) or a second laser sensor 32 (like Microepsilon LIR1302-100) may be used. The first laser sensor 31 is arranged at the upper side of the positioning arm 5 and is measuring the absolute vertical position in an absolute reference. The second laser sensor 32 is arranged close to the holding head 30, for example hold by a laser sensor arm 33, for determining the height. The second laser sensor 32 measures a relative position to the tiles which are already placed. A third laser sensor 34 (for example a model from the Dx 35 series of the company SICK) is arranged on top of the holding head 30. The third laser sensor is configured to determine an x and / or a y position.

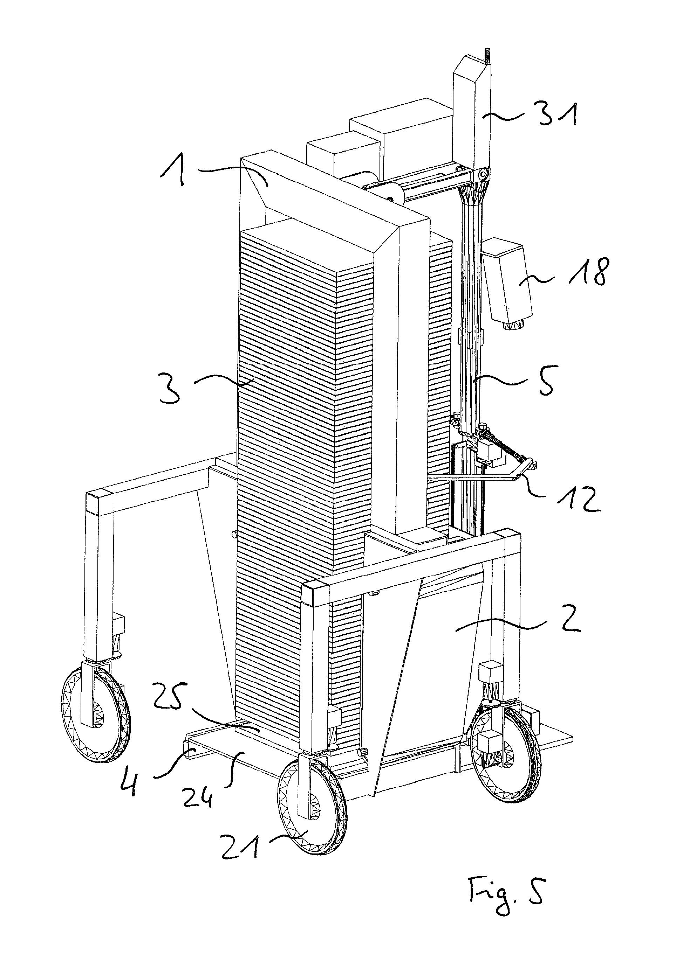

Fig. 5 shows the apparatus of Fig. 4 from a different perspective.

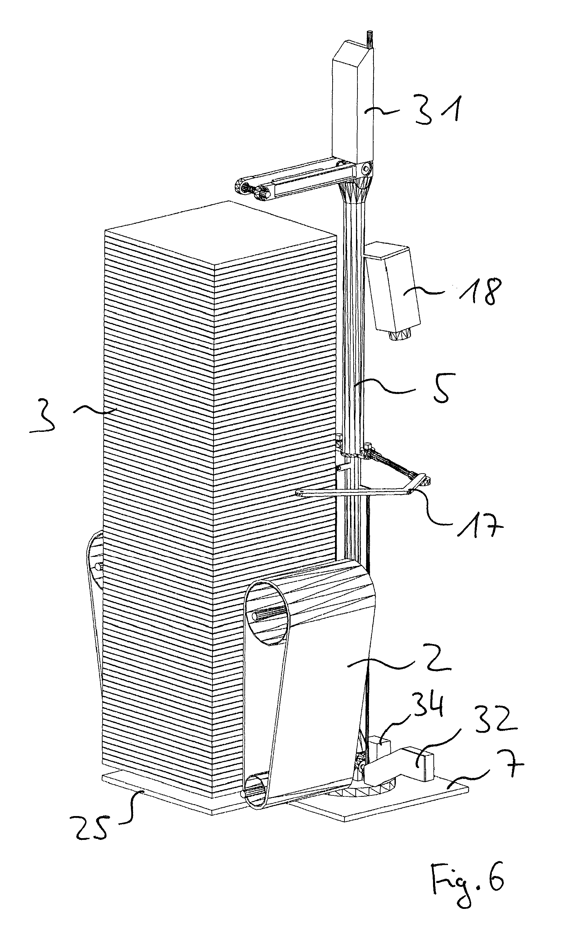

Fig. 6 shows some components of the apparatus shown in Fig. 4.

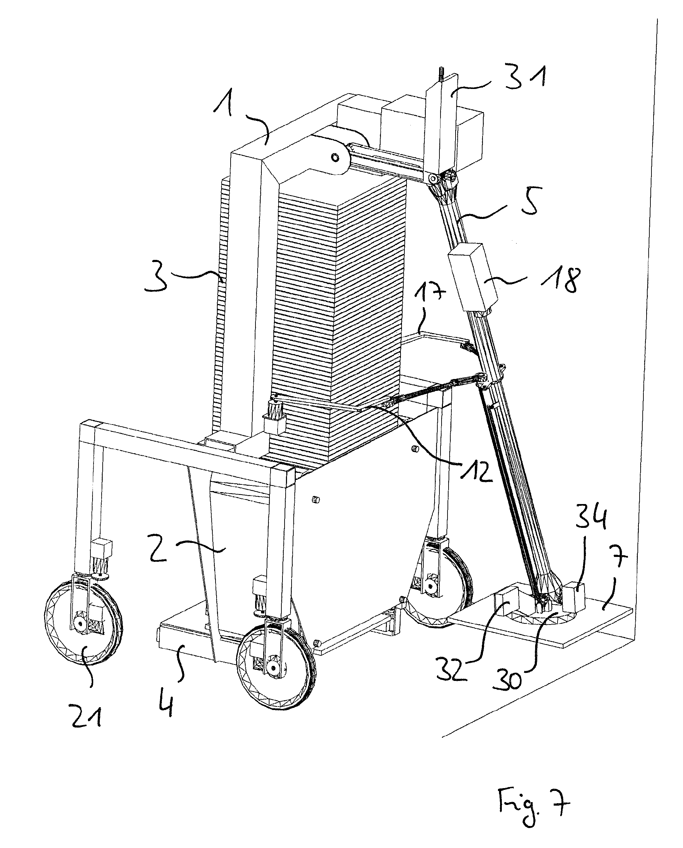

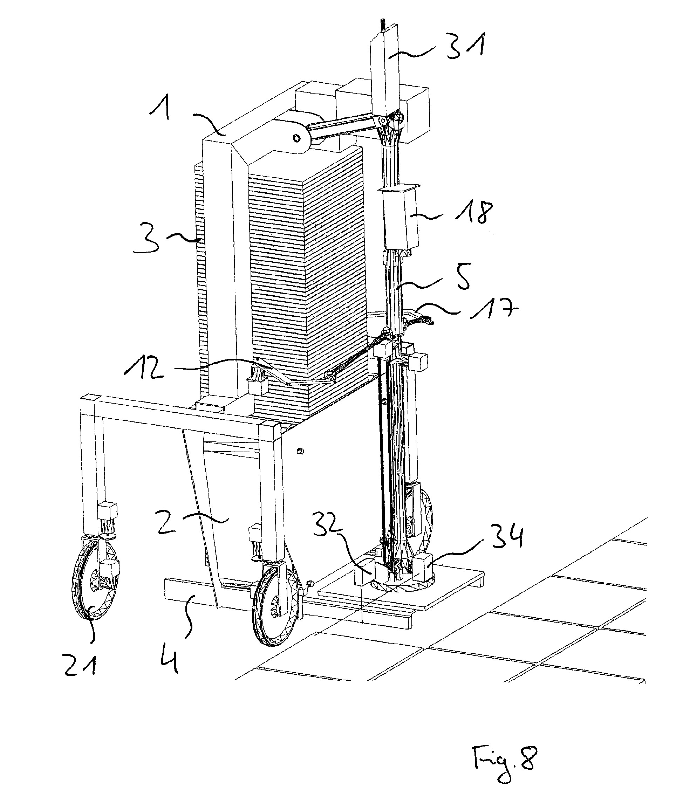

Figs. 7 and 8 show the apparatus of Fig. 4 in operation. A tile 7 is placed in an edge of a room (Fig. 7). In Fig. 8 several tiles have already been placed on the floor. The apparatus takes another tile on the drawer before placing it on the floor.

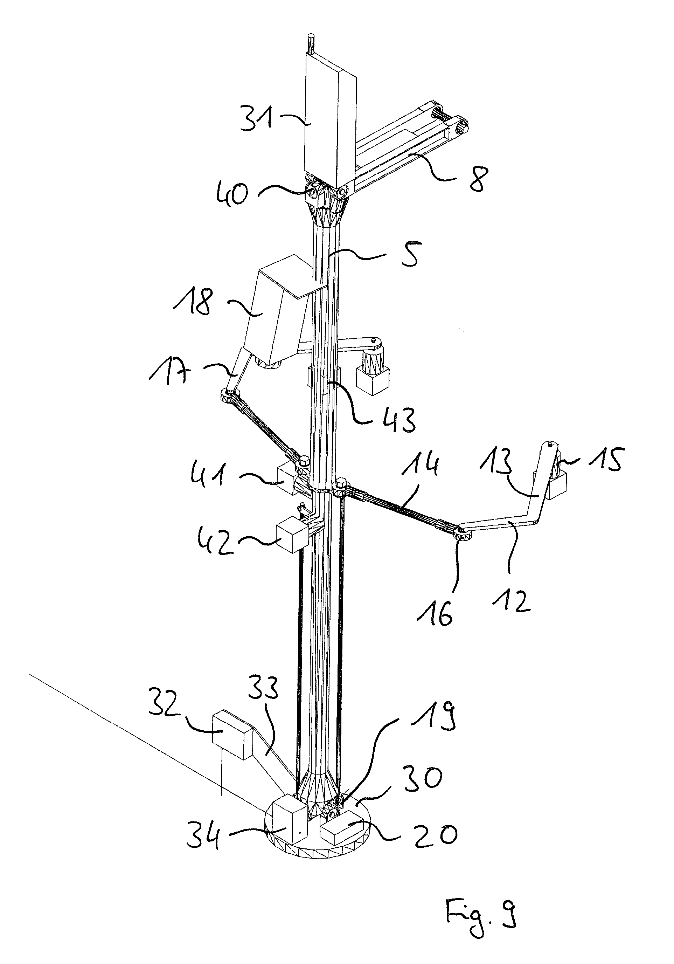

Fig. 9 shows the positioning arm 5 with several components. At an upper end the positioning arm 5 is connected to the upper arm 8 via a cardan joint 40. At a lower end of the positioning arm 5 the holding head 30 is connected with a cardan joint 19. With the cardan joint 19 and means for rotating the positioning arm 5 six degrees of freedom are provided for the holding head 30 and the tile held by the holding head 30. The camera 18 is configured to measure the x position, the y position and / or the angles relative to other tiles. The inclinometer 20 is configured to measure the angles around x and / or y direction. The first laser sensor 31 is configured to measure an absolute z position. The second laser sensor 32 is configured to measure a height (z position) relative to tiles placed on the floor. The third laser sensor 34 is configured to measure x and / or y position in absolute values. A step motor 41 is provided for a rotation of the positioning arm 5 around the x axis. Another step motor 42 is configured to rotate the positioning arm 5 around the y axis. A further motor 43 (i.e. a step motor) is provided for a rotation around the z axis of the tile.

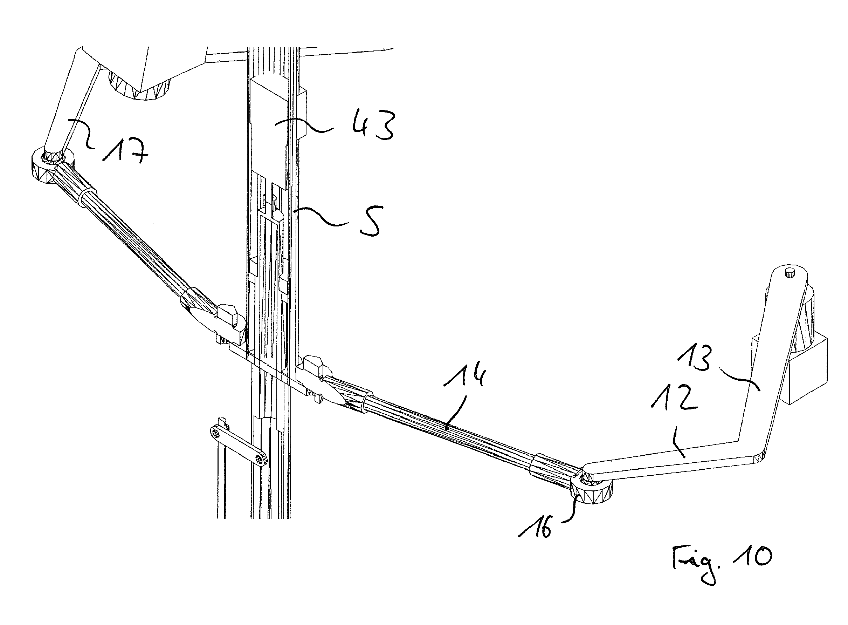

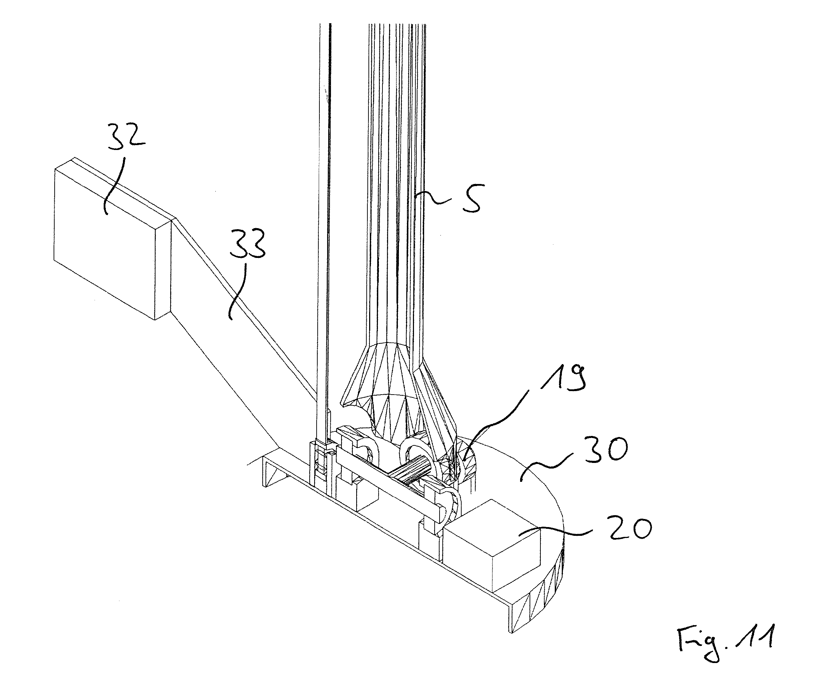

Fig. 10 and 11 show enlarged sections of the positioning arm 5.

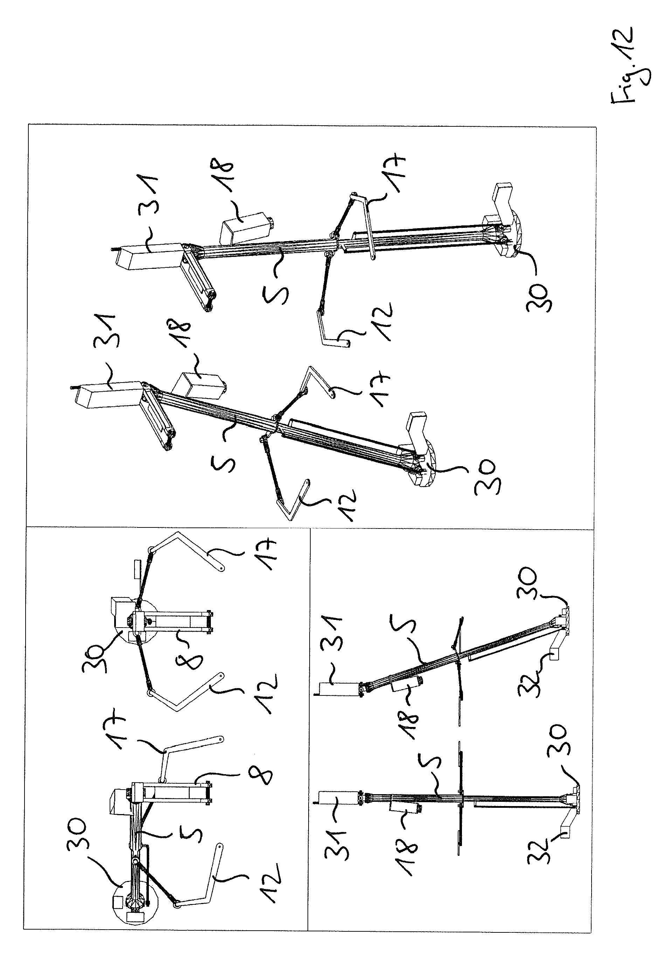

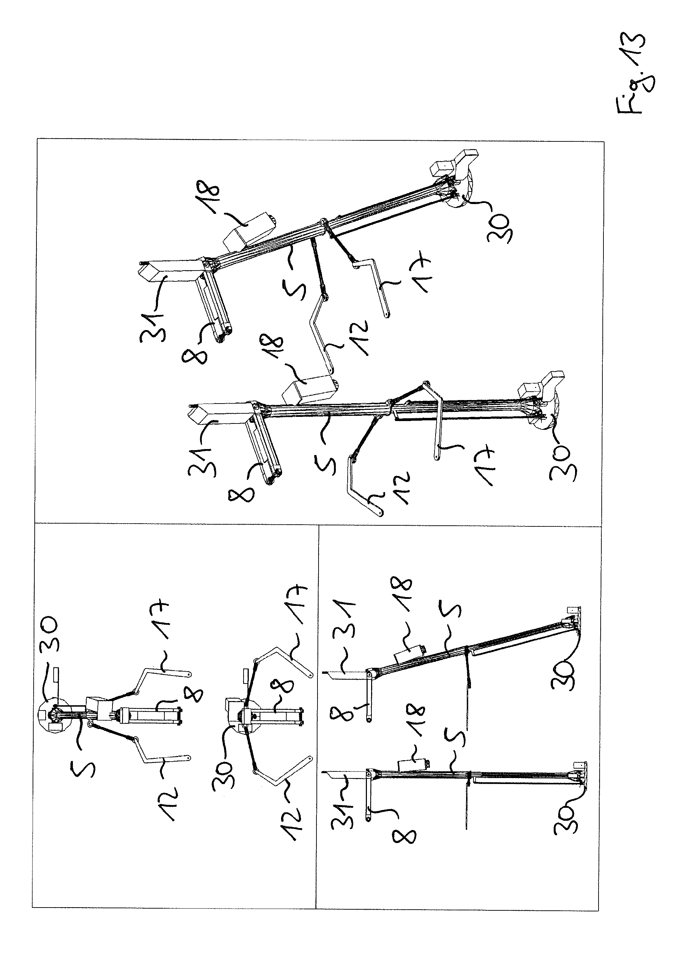

Fig. 12 and 13 show several configurations of the positioning arm 5 with the side arms 12, 17 and the upper arm 8. By moving the arms 12, 17 and 8, respectively, the position in x-, y- and z-direction and / or the orientation of the positioning arm 5 can be changed.

In operation, the apparatus is moved inside a room which floor shall be covered with tiles. Using a laser (for example the third laser sensor 34) the dimensions of the room including the length of the walls and / or the angles between the walls are determined. This information is transmitted to the control device and stored. A start position is determined by the control device. The start position may be one edge of the room (i.e. Fig. 7). Alternatively, the start position may be the center of the room or any other point.

The apparatus is loaded with several tiles which form a stack 3 that is held by the conveyor belts 2. Using conveyor step motor 26 the stack 3 is moved downwards until the last tile 25 of the stack 3 drops to the upper side 24 of the drawer device 4. The drawer device 4 is moved to a second position extending from below the stack 3. The positioning arm 5 is moved until the vacuum cup 6 is positioned above the tile 25. The positioning arm 5 is lowered until the tile 25 is held by the vacuum cup 6.

The positioning arm 5 is moved to a location where the tile shall be placed. The positioning arm 25 is lowered until the tile touches the floor. It may be provided that an adhesive (glue, cement or mortar) is applied to the floor before. Alternatively, the apparatus may comprise a gluing device for applying the adhesive to the floor. A force meter (like a load cell) may be used to determine the force with which the tile is pressed to the floor. Taking the information into account the control device can determine whether enough adhesive was applied. A signal indicating the status of the tile (OK or not OK) may be provided.

Using the wheels 21 the apparatus moves to a next position. Another tile is taken from the stack 3 and placed on the floor as described above. Using the camera 18 the position of the other tile with respect to the tile placed on the floor can be determined with high precision.

The apparatus is adapted to cover small or large areas with tiles. Further, border areas of a room, for example near the walls or around columns, can also be reached and tiled by this apparatus. The finishing which may need that the tiles are cut in smaller shape should be handled by human workers.

For all step motors, in particular for the further motor 43, the respective position of the motors can be measured to determine an angle of the motor. This allows to provide feedback information of the motor position.

The features mentioned above for the apparatus can also be applied to the method and vice versa.

All features disclosed in the specification, the claims and the figures can be relevant either alone or in any particular combination with each other.

## Claims

1. An apparatus for placing a tile (7, 25) on a floor, comprising:
- a holding device (2) configured to hold a stack of tiles (3),
- a positioning device (5) configured to hold a tile (7, 25) of the stack of tiles (3),
- a measuring device (18) configured to determine a coordination of the tile (7, 25), and
- a control device configured to receive measurement signals from the measuring device (18) and further configured to provide control signals to the positioning device (5),
wherein the positioning device (5) is further configured to place the tile (7, 25) on the floor according to the control signals provided by the control device.

2. The apparatus of claim 1, wherein the holding device (2) comprises two conveyor belts (2) between which the stack of tiles (3) is retained.

3. The apparatus of claim 1 or 2, further comprising a second measuring device (31) which is configured to determine an absolute vertical position of the tile (7, 25); a third measuring device (32) which is configured to measure a vertical position of the tile (7, 25) relative to tiles placed on the floor; a fourth measuring device (34) which is configured to measure an absolute x position and / or an absolute y position of the tile (7, 25); and / or a position detection device which is configured to measure a position of the apparatus.

4. The apparatus of any one of the preceding claims, further comprising a drawer device (4) which is arranged below the holding device (2) and which is configured to move between a first position and a second position.

5. The apparatus of any one of the preceding claims, wherein the positioning device (5) is vertically adjustable, horizontally adjustable and / or rotatable about an axis.

6. The apparatus of any one of the preceding claims, further comprising two side arms (12, 17) which are connected to the positioning device (5) and which are configured to adjust a horizontal position of the positioning device (5) and / or rotate the positioning device (5).

7. The apparatus of any one of the preceding claims, further comprising an upper arm (8) which is connected to the positioning device (5) and which is configured to adjust a vertical position of the positioning device (5).

8. The apparatus of any one of the preceding claims, wherein a holding head (30) is arranged on a lower end of the positioning device (5) for holding the tile (7, 25), wherein the holding head (30) is movable in six degrees of freedom.

9. The apparatus of claim 8, wherein the holding head (30) comprises a vacuum cup (6) for holding the tile (7, 25).

10. The apparatus of claim 8 or 9, wherein the holding head (30) is connected to the positioning device (5) by a cardan joint (19).

11. The apparatus of any one of claims 8 to 10, further comprising an inclinometer (20) arranged on the holding head (30).

12. The apparatus of any one of the preceding claims, further comprising a motion device (21).

13. The apparatus of any one of the preceding claims, further comprising a force meter configured to measure a pressure force exceeded on the tile when placing the tile on the floor.

14. The apparatus of any one of the preceding claims, further comprising a gluing device.

15. A method for placing a tile on a floor, comprising the steps of:
- providing an apparatus according to any one of the preceding claims,
- loading the holding device (2) of the apparatus with a stack of tiles (3), and
- placing the tiles using the apparatus.
